# EUROPÄISCHE PATENTANMELDUNG

(11) **EP 0 969 268 A1**
(43) Veröffentlichungstag der Anmeldung: **05.01.2000**
(21) Anmeldenummer: 99112393.6
(22) Anmeldetag: 29.06.1999
(51) Int. Cl.: G01F 1/60

(54) **Verfahren zum Regeln des Spulenstroms von magnetisch-induktiven Durchflussaufnehmern**

(30) Priorität: 03.07.1998 EP 98112321
(71) Anmelder: Endress + Hauser Flowtec AG, CH-4153 Reinach BL 1 (CH)
(72) Erfinder: Budmiger, Thomas, 4107 Ettingen (CH)
(74) Vertreter: Morstadt, Volker, Dipl.-Ing.

(57) **Zusammenfassung**

Zur Kompensation des abträglichen Einflusses von in Spulenkernen und/oder Polschuhen eines Magnetsystems von magnetisch-induktiven Durchflußmessern beim Umschalten des Spulenstroms (I) induzierten Wirbeiströmen auf die magnetische Induktion (B) werden mittels des Spannungsabfalls an einem Widerstand (10, 10'; 22, 22'), der mit einer Spulenanordnung (1) eine Serienschaltung bildet, die Teil einer H- oder T-Schaltung von Transistoren (13, 14, 15, 16) bzw. Schalter-Transistoren (25, 26) ist, in jeder Umschalt-Halbperiode ein Spannungs-Endwert (U_{c}) konstant geregelt und die Anstiegsdauer (tₐ) des Spulenstroms (I) und die Höhe des Spannungs-Endwerts derart beeinflußt, daß nach dem Erreichen eines Strommaximums (Iₘ) kein weiterer Anstieg des Spulenstroms auftritt, so daß das Magnetfeld einen dem konstanten Strom-Endwert entsprechenden konstanten Magnetfeld-Endwert (Bₘ) schon erreicht, wenn der Spulenstrom das Strommaximum erreicht. Dabei wird aus dem während einer Halbperiode nach dem Maximum des Spulenstroms bis zur Erreichung des konstanten Strom-Endwerts auftretenden Verlauf des Spannungsabfalls am Widerstand durch mindestens dreimaliges Abtasten eine Korrekturgröße für die in der nächsten Halbperiode liegende Spannung gebildet.

## Beschreibung

Die Erfindung betrifft ein Verfahren zum Regeln des Spulenstroms von magnetisch-induktiven Durchflußaufnehmern.

Dieser Spulenstrom fließt in einer eine Induktivität L aufweisenden Spulenanordnung, die Teil eines Magnetsystems ist, das Spulenkerne und/oder Polschuhe enthält. Der Spulenstrom ist in der ersten Halbperiode einer Periodendauer positiv mit einem konstanten ersten Strom-Endwert und danach durch Umschalten in der zweiten Halbperiode der Periodendauer negativ mit einem konstanten zweiten Strom-Endwert, der zum ersten Strom-Endwert betragsgleich ist.

Die Spulenanordnung ist z.B. eine Einzelspule, wenn der magnetisch-induktive Durchflußaufnehmer als Strömungssonde dient, vgl. die US-A 35 29 591, oder besteht z.B. aus zwei Spulenhälften, die diametral einander gegenüberliegend an einem Meßrohr angeordnet sind, durch das ein Fluid strömt, dessen Volumendurchfluß gemessen werden soll.

In der US-A 44 10 926 ist eine Schaltungsanordnung zur Erzeugung eines solchen Spulenstroms beschrieben. Diese Schaltungsanordnung umfaßt:
- eine Brückenschaltung als H-Schaltung mit
   -- einem ersten Brückenzweig aus dem gesteuerten Strompfad eines ersten Transistors,
   -- einem zweiten Brückenzweig aus dem gesteuerten Strompfad eines zweiten Transistors,
   -- einem dritten Brückenzweig aus dem gesteuerten Strompfad eines dritten Transistors und
   -- einem vierten Brückenzweig aus dem gesteuerten Strompfad eines vierten Transistors,
   -- einer ersten Brückendiagonalen zwischen dem mit dem ersten Transistor verbundenen zweiten Transistor und den mit dem dritten Transistor verbundenen vierten Transistor sowie
   -- einer zweiten Brückendiagonalen zwischen dem mit dem ersten Transistor verbundenen dritten Transistor und dem mit dem zweiten Transistor verbundenen vierten Transistor,
      --- wobei entweder der erste und der vierte Transistor
      --- oder der zweite und der dritte Transisor gleichzeitig leitend gesteuert sind, wodurch der Spulenstrom seine Richtung abwechselnd unkehrt,
- die erwähnte Spulenanordnung, die in der ersten Brückendiagonalen liegt,
- eine geregelte Stromquelle mit einem Ausgang für deren Strom,
- einen Widerstand,
   -- der einseitig an einem Schaltungsnullpunkt liegt,
   -- mit der H-Schaltung eine Serienschaltung bildet und
   -- durch den der Spulenstrom fließt,
- eine zwischen den Ausgang der Stromquelle und die Serienschaltung eingefügte Diode, deren Flußrichtung gleich der Richtung des Stromes der Stromquelle ist, und
- einen zu der Serienschaltung parallelgeschalteten, eine Kapazität C aufweisenden Kondensator, der mit der erwähnten Induktivität L einen Resonanzkreis bildet, aufgrund von dessen Wirkung nach jedem Richtungswechsel des Spulenstroms
   -- die Spannung über der H-Schaltung resonanz-überhöht ist und
   -- der Spulenstrom während eines Anstiegs zu Beginn jeder der erwähnten Halbperioden eine steuere Anstiegsflanke hat, als wenn der Resonanzkreis nicht vorhanden wäre.

In der US-A 44 10 926 ist ferner eine Schaltungsanordnung zur Erzeugung eines Spulenstroms beschrieben, die eine T-Schaltung enthält, die umfaßt:
- einen Widerstand,
   -- der einseitig an einem Schaltungsnullpunkt liegt und
   -- der mit der Spulenanordnung eine Serienschaltung bildet, durch die der Spulenstrom fließt,
   -- einen ersten Schalter-Transistor, von dessen gesteuertem Strompfad ein erster Anschluß mit einem zweiten Anschluß der Serienschaltung verbunden ist und ein zweiter Anschluß an einem ersten Spannungsausgang einer gesteuerten Spannungsquelle liegt, der eine über der Serienschaltung liegende positive Spannung abgibt,
   -- einen zweiten Schalter-Transistor, von dessen gesteuertem Strompfad ein erster Anschluß mit dem zweiten Anschluß der Serienschaltung verbunden ist und ein zweiter Anschluß an einem zweiten Spannungsausgang der gesteuerten Spannungsquelle liegt, der eine über der Serienschaltung liegende negative Spannung bestimmt,
- einen zwischen zwischen den zweiten Ausgang des ersten Schalter-Transistors und den Schaltungsnullpunkt geschalteten ersten Kondensator der Kapazität C₁
- einen zwischen zwischen den zweiten Ausgang des zweiten Schalter-Transistors und den Schaltungsnullpunkt geschalteten zweiten Kondensator der Kapazität C₂,
   -- welche Kondensatoren mit der erwähnten Induktivität L Resonanzkreise bilden, aufgrund von deren Wirkung nach jedem Richtungswechsel des Spulenstroms
      --- die Spannung über der T-Schaltung resonanz-überhöht ist und
      --- der Spulenstrom während eines Anstiegs zu Beginn jeder der erwähnten Halbperioden eine steilere Anstiegsflanke hat, als wenn der Resonanzkreis nicht vorhanden wäre.

Ferner ist in der US-A 42 04 240 eine Schaltungsanordnung mit einer Spannungsquelle zur Erzeugung des Spulenstroms eines magnetisch-induktiven Durchflußaufnehmers beschrieben, die eine Spannung abgibt, von der ein Spannungs-Anfangswert in jeder erwähnten Halbperiode während einer Anstiegsdauer des Spulenstroms - als einer ersten Teilperiode - höher ist als ein Spannungs-Endwert während einer zweiten Teilperiode - als Rest der Halbperiode.

Die Spulenkerne und/oder Polschuhe des Magnetsystems bestehen meistens aus einem weich-magnetischen Material. Es sind aber auch schon Magnetsysteme mit ferromagnetischen Spulenkernen beschrieben worden.

Bei beiden Arten von Magnetsystemen werden im Magnetsystem aufgrund des Umschaltens und des Anstiegs des Spulenstroms Wirbelströme induziert, die verhindern, daß der Anstieg des Magnetfelds exakt dem Anstieg des Spulenstroms folgt, wie dies ohne Spulenkerne und/oder Polschuhe der Fall wäre. Vielmehr wird der Anstieg des Magnetfelds gegenüber dem des Spulenstroms verzögert und verflacht. Diese nachteilge Wirkung der Wirbelströme tritt auch bei und trotz der erwähnten Resonanz-Überhöhung auf.

Die Wirkung der Wirbeiströme läßt sich mittels eines Ersatzschaltbildes veranschaulichen, in dem der (reinen) Induktivität L eine Wirbelstrom-Quelle parallelgeschaltet ist, deren Strom sich zum Strom in der (reinen) Induktivität L zu einem Gesamt-Spulenstrom addiert, der u.a. im Widerstand fließt. Somit ist der Spannungsabfall am Widerstand nur ein Maß für den Gesamt-Spulenstrom, nicht jedoch für den (reinen) Spulenstrom. Dies ist aber für die exakte Konstant-Regelung des Spulenstroms erforderlich.

In der US-A 47 84 000 ist eine Lösung dieses Gesamt-Problems schon anhand von deren Fig. 6 angedeutet. Es wird allerdings vorausgesetzt, daß im nicht eingeregelten Zustand der Spulenstrom während jeder gesamten Halbperiode nicht konstant ist, und es wird zeitlich zweimal nacheinander in einem Bereich abgetastet, in dem im eingeregelten Zustand der Spulenstrom konstant ist. Die zweimalige Abtastung in diesem Bereich hat sich aber als unzureichend hearusgestellt.

Die Erfindung dient der verbesserten Lösung des oben erläuterten Gesamt-Problems; sie soll daher ein Verfahren angeben, das den nachteiligen Einfluß der Wirbelströme auf den Anstieg und die Anstiegszeit des Magnetfelds vollständig eliminiert, so daß das Magnetfeld den konstanten Magnetfeld-Endwert schon erreicht, wenn der Spulenstrom seinen Maximalwert annimmt.

Hierzu besteht eine erste Variante der Erfindung in einem Verfahren zum Regeln des in einer Spulenanordnung fließenden Spulenstroms, die
- Teil eines ein Magnetfeld erzeugenden Magnetsystems eines magnetisch-induktiven Durchflußaufnehmers ist,
- einen Spulenkern und/oder einen Polschuh umfaßt und
- eine Induktivität L aufweist,
- welcher Spulenstrom in der ersten Halbperiode einer Periodendauer positiv mit einem konstanten ersten Strom-Endwert und in deren zweiter Halbperiode negativ mit einem konstanten zweiten Strom-Endwert ist, der zum ersten Strom-Endwert betragsgleich ist, und
- welcher Spulenstrom von einer Schaltungsanordnung erzeugt wird, die enthält:
   -- eine Brückenschaltung als H-Schaltung mit
      --- einem ersten Brückenzweig aus dem gesteuerten Strompfad eines ersten Transistors,
      --- einem zweiten Brückenzweig aus den gesteuerten Strompfad eines zweiten Transistors,
      --- einem dritten Brückenzweig aus den gesteuerten Strompfad eines dritten Transistors und
      --- einem vierten Brückenzweig aus den gesteuerten Strompfad eines vierten Transistors,
      --- einer ersten Brückendiagonalen zwischen dem mit dem ersten Transistor verbundenen zweiten Transistor und dem mit dem dritten Transistor verbundenen vierten Transistor sowie
      --- einer zweiten Brückendiagonalen zwischen dem mit dem ersten Transistor verbundenen dritten Transistor und dem mit dem zweiten Transistor verbundenen vierten Transistor, wobei
         ---- entweder der erste und der vierte Transistor
         ---- oder der zweite und der dritte Transisor gleichzeitig leitend gesteuert sind,
   -- die Spulenanordnung, die in der ersten Brückendiagonalen liegt,
   -- einen Widerstand, der mit der H-Schaltung eine Serienschaltung bildet, von der ein erster Anschluß an einem Schaltungsnullpunkt liegt und durch die der Spulenstrom fließt, und
   -- eine gesteuerte Spannungsquelle, die
      --- einen Spannungsausgang aufweist und
      --- eine über der Serienschaltung liegende Spannung bestimmt,
         ---- von der in jeder Halbperiode ein Spannungs-Anfangswert während einer Anstiegsdauer des Spulenstroms - als einer ersten Teilperiode - höher ist als ein Spannungs-Endwert während einer zweiten Teilperiode als Rest der Halbperiode,
   bei welchen Verfahren mittels des Spannungsabfalls am Widerstand
- einerseits zur Erzeugung des ersten bzw. des zweiten Strom-Endwerts der Spannungs-Endwert konstant geregelt wird und
- andererseits eine Wirkung von Wirbelströmen, die während des Anstiegs des Spulenstroms in den Spulenkernen und/oder den Polschuhen induziert werden und die die Anstiegsflanke des Magnetfelds gegenüber der des Spulenstroms verzögern, kompensiert wird, indem
   -- in jeder Halbperiode die Anstiegsdauer des Spulenstroms und die Höhe des Spannungs-Endwerts derart beeinflußt werden, daß nach dem Erreichen eines Strommaximums kein weiterer Anstieg des Spulenstroms auftritt, so daß das Magnetfeld einen dem konstanten Strom-Endwert des Spulenstroms entsprechenden konstanten Magnetfeld-Endwert schon erreicht, wenn der Spulenstrom das Strommaximum erreicht,
   -- wobei aus dem während einer Halbperiode nach dem Maximum des Spulenstroms bis zur Erreichung des konstanten Strom-Endwerts auftretenden Verlauf des Spannungsabfalls am Widerstand durch mindestens dreimaliges aufeinanderfolgendes Abtasten eine Korrekturgröße für die über der H-Schaltung in der nächsten Halbperiode liegende Spannung gebildet wird.

Zur Lösung des oben genannten Gesamt-Problems besteht die Erfindung nach einer zweiten Variante in einem Verfahren zum Regeln des in einer Spulenanordnung fließenden Spulenstroms, die
- Teil eines ein Magnetfeld erzeugenden Magnetsystems eines magnetisch-induktiven Durchflußaufnehmers ist,
- einen Spulenkern und/oder einen Polschuh umfaßt und
- eine Induktivität L aufweist,
- welcher Spulenstrom in der ersten Halbperiode einer Periodendauer positiv mit einem konstanten ersten Strom-Endwert und in deren zweiter Halbperiode negativ mit einem konstanten zweiten Strom-Endwert ist, der zum ersten Strom-Endwert betragsgleich ist, und
- welcher Spulenstrom von einer Schaltungsanordnung erzeugt wird, die enthält:
   -- eine gesteuerte Spannungsquelle, die einen ersten und einen zweiten Spannungsausgang aufweist, und
   -- eine T-Schaltung, die umfaßt:
      --- einen Widerstand, der mit der Spulenanordnung eine Serienschaltung bildet, von der ein erster Anschluß an einem Schaltungsnullpunkt liegt und durch die der Spulenstrom fließt,
      --- einen ersten Schalter-Transistor, von dessen gesteuertem Strompfad ein erster Anschluß mit einem zweiten Anschluß der Serienschaltung verbunden ist und ein zweiter Anschluß am ersten Spannungsausgang der gesteuerten Spannungsquelle liegt, der eine über der Serienschaltung liegende positive Spannung abgibt,
      --- einen zweiten Schalter-Transistor, von dessen gesteuertem Strompfad ein erster Anschluß mit dem zweiten Anschluß der Serienschaltung verbunden ist und ein zweiter Anschluß am zweiten Spannungsausgang der gesteuerten Spannungsquelle liegt, der eine über der Serienschaltung liegende negative Spannung abgibt,
         ---- von welcher positiven bzw. negativen Spannung ein positiver bzw. negativer Spannungs-Anfangswert in jeder Halbperiode während einer Anstiegsdauer des Spulenstroms - als einer ersten Teilperiode - höher bzw. niedriger ist als ein positiver bzw. negativer Spannungs-Endwert während einer zweiten Teilperiode als Rest der Halbperiode,
   bei welchem Verfahren mittels des Spannungsabfalls am Widerstand
- einerseits zur Erzeugung des ersten bzw. des zweiten Strom-Endwerts der positive bzw. negative Spannungs-Endwert konstant geregelt wird und
- andererseits eine Wirkung von Wirbelströmen, die während des Anstiegs des Spulenstroms in den Spulenkernen und/oder den Polschuhen induziert werden und die die Anstiegsflanke des Magnetfelds gegenüber der des Spulenstroms verzögern, kompensiert wird, indem
   -- in jeder Halbperiode die Anstiegsdauer des Spulenstroms und die Höhe des positiven bzw. negativen Spannungs-Endwerts derart beeinflußt werden, daß nach dem Erreichen eines Strommaximums kein weiterer Anstieg des Spulenstroms auftritt, so daß das Magnetfeld einen dem konstanten Strom-Endwert des Spulenstroms entsprechenden konstanten Magnetfeld-Endwert schon erreicht, wenn der Spulenstrom das Strommaximum erreicht,
   -- wobei aus dem während einer Halbperiode nach dem Maximum des Spulenstroms bis zur Erreichung des konstanten Strom-Endwerts auftretenden Verlauf des Spannungsabfalls am Widerstand durch mindestens dreimaliges aufeinanderfolgendes Abtasten eine Korrekturgröße für die über der T-Schaltung in der nächsten Halbperiode liegende Spannung gebildet wird.

Nach einer bevorzugten Weiterbildung der ersten Variante der Erfindung ist
- ein erster Anschluß des Widerstands am Spannungsausgang der Spannungsquelle und
- ein zweiter Anschluß des Widerstands über eine Diode, deren Flußrichtung gleich der Richtung des Spulenstroms ist, am Verbindungspunkt von erstem und drittem Transistor der H-Schaltung angeschlossen, während der Verbindungspunkt von zweitem und vierten Transistor am Schaltungsnullpunkt liegt, und
- zur H-Schaltung ist ein eine Kapazität C aufweisender Kondensator parallelgeschaltet,
   -- der mit der Induktivität L einen Resonanzkreis bildet, aufgrund von dessen Wirkung
      --- die Spannung über der H-Schaltung resonanz-überhöht ist und
      --- der Spulenstrom während der Anstiegsdauer eine steilere Anstiegsflanke hat, als wenn der Resonanzkreis nicht vorhanden wäre.

Nach einer bevorzugten Weiterbildung der zweiten Variante der Erfindung
- liegt die Spulenanordnung am Schaltungsnullpunkt,
- liegt der Widerstand zwischen dem Verbindungspunkt des ersten und des zweiten Schalter-Transistors und der Spulenanordnung,
- ist ein zweiter Anschluß des ersten Schalter-Transistors
   -- über die Katoden-Anoden-Strecke einer ersten Diode mit dem ersten Spannungsausgang der gesteuerten Spannungsquelle und
   -- über einen ersten Kondensator der Kapazität C₁ mit dem Schaltungsnullpunkt verbunden, und
- ist ein zweiter Anschluß des zweiten Schalter-Transistors
   -- über die Anoden-Katoden-Strecke einer zweiten Diode mit dem zweiten Spannungsausgang der gesteuerten Spannungsquelle und
   -- über einen zweiten Kondensator der Kapazität C₂ mit dem Schaltungsnullpunkt verbunden,
   -- welcher erste bzw. zweite Kondensator mit der Induktivität L jeweils einen Resonanzkreis bildet, aufgrund von dessen Wirkung
      --- die Spannung über der Serienschaltung resonanz-überhöht ist und
      --- der Spulenstrom während der Anstiegsdauer eine steilere Anstiegsflanke hat, als wenn der Resonanzkreis nicht vorhanden wäre.

Grundgedanke der beiden Varianten der Erfindung ist es, die für die Erzeugung des Spulenstroms in jeder Halbperiode benötigte Spannung und deren zeitlichen Verlauf unter Heranziehung des nach dem Maximum des Spulenstroms bis zur Erreichung des konstanten Strom-Endwerts auftretenden Verlaufs des Spulenstroms in der vorhergehenden Halbperiode gezielt vorauszuberechnen.

Ein Vorteil der Erfindung besteht darin, daß durch sie erstmals erreicht wird, daß der Anstieg des Magnetfelds exakt dem Anstieg des Spulenstroms folgt, wie dies bei Spulensystemen ohne Spulenkerne und/oder Polschuhe der Fall ist. Somit erreicht das Magnetfeld bereits zu einem früheren Zeitpunkt seinen konstanten Magnetfeld-Endwert, als es ohne die Erfindung der Fall wäre.

Die Erfindung wird nun anhand der Figuren der Zeichnung näher erläutert, in der Ausführungsbeispiele dargestellt sind.
- Fig. 1: zeigt ein schematisches Schaltbild eines ersten Ausführungsbeispiels mit einer H-Schaltung,
- Fig. 2: zeigt ein schematisches Schaltbild eines zweiten Ausführungsbeispiels mit einer H-Schaltung,
- Fig. 3: zeigt ein schematisches Schaltbild eines ersten Ausführungsbeispiels mit einer T-Schaltung,
- Fig. 4: zeigt ein schematisches Schaltbild eines zweiten Ausführungsbeispiels mit einer T-Schaltung,
- Fig. 5a und 5b: zeigen Kurvenverläufe des Spulenstroms und der magnetischen Induktion bzw. der Spannung der Spannungsquelle, und
- Fig. 6: zeigt ein Flußdiagramm eines bei der Erfindung verwendeten Mikroprozessors.

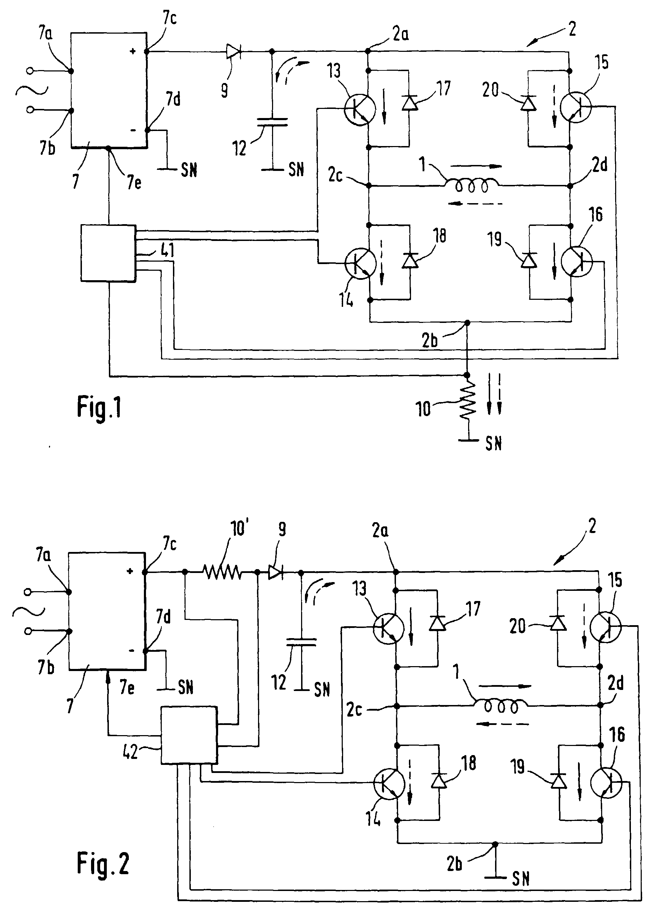

Die Fig. 1 und 2 betreffen Ausführungsbeispiele mit einer jeweiligen Brückenschaltung als H-Schaltung 2. In einem ersten Brückenzweig liegt der gesteuerte Strompfad eines ersten Transistors 13, in einem zweiten Brückenzweig der gesteuerte Strompfad eines zweiten Transistors 14, in einem dritten Brückenzweig der gesteuerte Strompfad eines dritten Transistors 15 und in einem vierten Brückenzweig der gesteuerte Strompfad eines vierten Transistors 16.

Durch diesen Aufbau ergeben sich vier Eckpunkte 2a, 2b, 2c, 2d der H-Schaltung: Die Transistoren 13, 14 sind durch den Eckpunkt 2c, die Transistoren 14, 16 durch den Eckpunkt 2b, die Transistoren 15, 16 durch den Eckpunkt 2d und die Transistoren 13, 15 durch den Eckpunkt 2a miteinander verbunden.

Eine erste Brückendiagonale liegt zwischen den Eckpunkten 2a, 2b und eine zweite Brückendiagonale zwischen den Eckpunkten 2c, 2d. In die zweite Brückendiagonale ist eine Spulenanordnung 1 gelegt, d.h. ein erster bzw. ein zweiter Anschluß der Spulenanordnung ist mit dem Eckpunkt 2c bzw. 2d verbunden.

Im Betrieb der Schaltungsanordnung sind entweder der erste und der vierte Transistor 13, 16 oder der zweite und der dritte Transisor 14, 15 gleichzeitig leitend gesteuert. Somit kann im ersten Fall (Transistoren 13, 16 leitend) ein (positiv vorausgesetzter) Strom vom Eckpunkt 2a zum Eckpunkt 2b durch die Spulenanordnung 1 und in der durch den nicht-gestrichelt gezeichneten Pfeil angegebenen Richtung fließen. Sind dagegen die Transistoren 14, 15 leitend, so fließt der gleiche Strom in umgekehrter Richtung durch die Spulenanordnung 1, wie dies durch den gestrichelt gezeichneten Pfeil veranschaulicht ist.

Die Spulenanordnung 1 hat eine Induktivität L und ist Teil eines ein Magnetfeld erzeugenden Magnetsystems eines magnetisch-induktiven Durchflußaufnehmers, der nicht dargestellt ist, da der mechanische Aufbau solcher Aufnehmer dem Fachmann längst bekannt ist, vgl. die eingangs genannte US-A 42 04 240. Für die Erfindung ist lediglich von Interesse, daß das Magnetsystem einen Spulenkern und/oder einen Polschuh umfaßt.

Wie dem Fachmann ebenfalls längst geläufig ist, wird der Spulenstrom durch das erwähnte abwechselnde Leitendsteuern der Transistoren 13, 16 bzw. 14, 15 so erzeugt, daß er in der ersten Halbperiode einer Periodendauer positiv mit einem konstanten ersten Strom-Endwert und in deren zweiter Halbperiode negativ mit einem konstanten zweiten Strom-Endwert ist, der zum ersten Strom-Endwert betragsgleich ist. Unter Strom-Endwert wird derjenige konstante Wert des Spulenstroms, z.B. 85 mA, verstanden, der vor dem Umschalten in die andere Stromrichtung fließt.

Der Eckpunkt 2c liegt in Fig. 1 über einen Widerstand 10 an einem Schaltungsnullpunkt SN. Der Widerstand 10 bildet mit der H-Schaltung 2 eine Serienschaltung und ist vom Spulenstrom durchflossen.

In Fig. 1 ist ferner eine gesteuerte Spannungsquelle 7 dargestellt, die einen Spannungsausgang 7c aufweist und eine über der Serienschaltung, also zwischen dem Eckpunkt 2a und dem Schaltungsnullpunkt SN, liegende, hier positiv vorausgesetzte Spannung bestimmt, vgl. das Pluszeichen am Ausgang 7c. Die gesteuerte Spannungsquelle 7 ist über zwei Anschlüsse 7a, 7b vom Netz gespeist; sie liegt ferner über einen Ausgang 7d am Schaltungsnullpunkt SN.

Die Spannung am Ausgang 7c ist über die Anoden-Katoden-Strecke einer Diode 9 an den Eckpunkt 2a gelegt. Zum Schaltungsnullpunkt SN führt von der Katode der Diode 9 und dem Eckpunkt 2a ein Kondensator 12, der eine Kapazität C hat.

In Fig. 2 ist die Reihenfolge von Spulenanordnung und Widerstand in der Serienschaltung vertauscht: Der Eckpunkt 2b der H-Schaltung 2 liegt nunmehr am Schaltungsnullpunkt SN; dagegen ist der Widerstand als Widerstand 10' nun zwischen dem Ausgang 7c der gesteuerten Spannungsquelle 7 und der Anode der Diode 9 angeordnet.

Dies ergibt den Vorteil, daß ein allfälliger Kurzschluß zwischen den Eckpunkten 2c, 2d, also z.B. in der Spulenanordnung 2, die gerade leitenden Transistoren 13, 16 bzw. 14, 15 nicht zerstören kann, da der Spulenstrom durch den Widerstand 10' begrenzt wird.

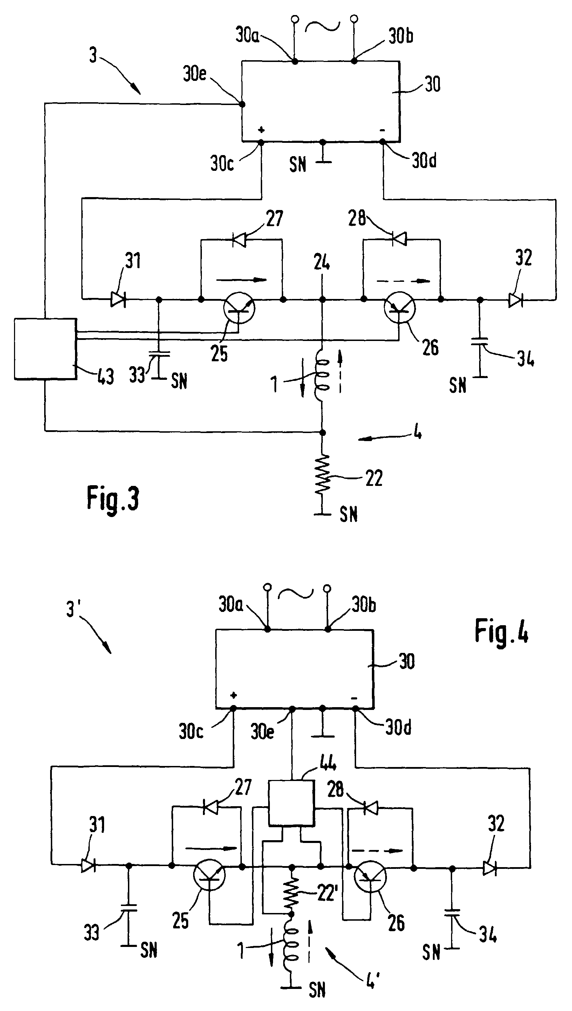

Die Fig. 3 und 4 betreffen Ausführungsbeispiele mit einer jeweiligen T-Schaltung 3 bzw. 3'. Ein Widerstand 22 bzw. 22' bildet mit der Spulenanordnung 1 eine Serienschaltung 4 bzw. 4'. Diese ist bei der Schaltung von Fig. 3 so gebildet, daß die Spulenanordnung 1 über den Widerstand 22 am Schaltungsnullpunkt SN liegt, und diese ist vom Spulenstrom durchflossen. Demgegenüber liegt in Fig. 4 am Schaltungsnullpunkt SN der erste Anschluß der Serienschaltung 4'.

Ein erster Anschluß des gesteuerten Strompfads eines ersten Schalter-Transistors 25 ist mit einem zweiten Anschluß der Serienschaltung 4, bzw. 4' verbunden. Ein zweiter Anschluß dieses Strompfads liegt an einem ersten Ausgang 30c einer gesteuerten Spannungsquelle 30, der eine über der Serienschaltung liegende positive Spannung bestimmt, vgl. das Pluszeichen am Ausgang 30c.

Ein erster Anschluß des gesteuerten Strompfads eines zweiten Schalter-Transistors 26 ist mit dem zweiten Anschluß der Serienschaltung 4 bzw. 4' verbunden. Ein zweiter Anschluß dieses Strompfads liegt an einem zweiten Ausgang 30d der gesteuerten Spannungsquelle 30, der eine über der Serienschaltung liegende negative Spannung bestimmt, vgl. das Minuszeichen am Ausgang 30d.

Die Schalter-Transistoren 25, 26 werden abwechselnd leitend gesteuert, so daß der Spulenstrom abwechselnd seine Richtung umkehrt, wie die beiden Pfeile an der Spulenanordnung 1 veranschaulichen. Auch hier ist der Spulenstrom in der ersten Halbperiode einer Periodendauer positiv mit einem konstanten ersten Strom-Endwert und in deren zweiter Halbperiode negativ mit einem konstanten zweiten Strom-Endwert, der zum ersten Strom-Endwert betragsgleich ist.

In den Fig. 3 und 4 ist die positive Spannung am Ausgang 30c der Spannungsquelle 30 über die Anoden-Katoden-Strecke einer ersten Diode 31 an den zweiten Anschluß des Schalter-Transistors 25 gelegt. Von diesem Anschluß und der Katode der Diode 31 führt zum Schaltungsnullpunkt SN ferner ein erster Kondensator 33, der eine Kapazität C₁ hat.

Die negative Spannung am Ausgang 30d der Spannungsquelle 30 ist über die Katoden-Anoden-Strecke einer zweiten Diode 32 an den zweiten Anschluß des Schalter-Transistors 26 gelegt. Von diesem Anschluß und der Katode der Diode 32 führt zum Schaltungsnullpunkt SN ferner ein zweiter Kondensator 34, der eine Kapazität C₂ hat.

Bei den Ausführungsbeispielen der Fig. 1 und 2 bzw. 3 und 4 bildet die erwähnte Induktivität L der Spulenanordnung 1 mit der Kapazität C des Kondensators 12 bzw. mit den Kapazitäten C₁ bzw. C₂ einen jeweiligen Resonanzkreis. Dieser bewirkt, daß die Spannung über der Serienschaltung resonanz-überhöht ist und der Spulenstrom während eines Anstiegs zu Beginn jeder Halbperiode eine steilere Anstiegsflanke hat, als wenn der Resonanzkreis nicht vorhanden wäre.

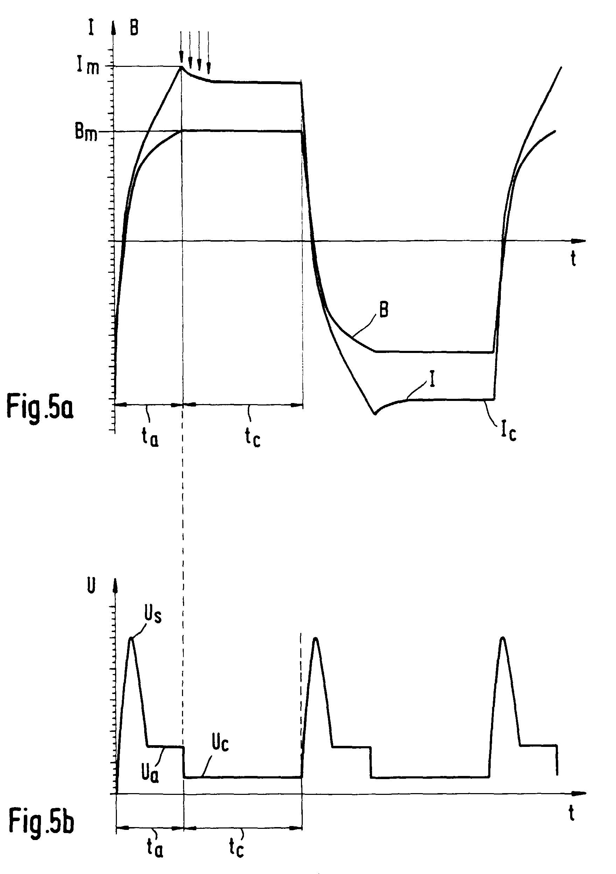

Bei der Erfindung wird die Spannungsquelle 7 bzw. 30 so gesteuert, daß sie in jeder Halbperiode während einer ersten Teilperiode des Spulenstroms, die im folgenden als Anstiegsdauer tₐ bezeichnet ist, einen Spannungs-Anfangswert Uₐ erzeugt, der, z.B. mehrfach, höher ist als ein konstant geregelter Spannungs-Endwert U_{c} während einer zweiten Teilperiode , die im folgenden als Restdauer t_{c} bezeichnet ist, vgl. Fig. 5a und 5b.

Bei der Erfindung wird ferner der Spannungsabfall am Widerstand 10, 10' bzw. 22, 22' dazu herangezogen, daß eine Wirkung von Wirbelströmen, die während des Anstiegs des Spulenstroms in den Spulenkernen und/oder den Polschuhen induziert werden und die die Anstiegsflanke des Magnetfelds gegenüber der Anstiegsflanke des Spulenstroms verzögern, kompensiert wird.

Dies wird dadurch erreicht, daß in jeder Halbperiode die Anstiegsdauer tₐ des Spulenstroms und die Höhe des positiven bzw. negativen Spannungs-Endwerts U_{c} derart beeinflußt bzw. geregelt werden, daß einerseits nach dem Erreichen eines Strommaximums Iₘ kein weiterer Anstieg des Spulenstroms auftritt, so daß das Magnetfeld einen dem konstanten Strom-Endwert des Spulenstroms entsprechenden konstanten Magnetfeld-Endwert Bₘ schon erreicht, wenn der Spulenstrom das Strommaximum Iₘ erreicht, vgl. Fig. 5a, und daß andererseits die Höhe des positiven bzw. negativen Spannungs-Endwerts U_{c} immer den konstanten Strom-Endwert I_{c} von z.B. 85 mA bedingt.

Dies wird dadurch erreicht, daß aus dem während einer Halbperiode nach dem Strommaximum Iₘ des Spulenstroms bis zum Erreichen des Strom-Endwerts auftretenden Verlauf des Spannungsabfalls am Widerstand durch mindestens dreimaliges aufeinanderfolgendes Abtasten eine Korrekturgröße für die Spannung über der H-Schaltung bzw. der T-Schaltung in der nächsten Halbperiode gebildet wird.

In Fig. 5a ist in Ordinatenrichtung über der Zeit t als Abszisse der Verlauf des Spulenstrom I und der Induktion B des Magnetfelds für eine ganze Periodendauer aufgetragen. In der ersten Halbperiode mit positivem Spulenstrom I ist eingezeichnet, daß sich die Halbperiodendauer aus einer Anstiegsdauer tₐ und einer Restdauer t_{c} zusammensetzt; diese ist gleich derjenigen Dauer, während der die Induktion B des Magnetfelds konstant ist.

Während der Anstiegsdauer tₐ steigt einerseits der Spulenstrom I steil an, fällt dann nach Erreichen eines Strommaximums Iₘ wieder ab und erreicht erst später als die Induktion B seinen konstanten Strom-Endwert, vgl. den nur allmählichen Abfall des Spulenstroms nach dem Strommaximum Iₘ. Dieses Verhalten des Spulenstroms ist auf die eingangs erläuterten, in den Spulenkernen und/oder den Polschuhen induzierten Wirbelströme zurückzuführen. Der Zeitpunkt des Erreichens des Strommaximums Iₘ bestimmt die Grenzlinie zwischen der Anstiegsdauer tₐ und der Restdauer t_{c}.

Während der Anstiegsdauer tₐ steigt andererseits die Induktion B zunächst fast mit identischer Steilheit wie der Spulenstrom an, der Anstieg wird später allerdings flacher und erreicht bereits am Ende der Anstiegsdauer tₐ wie bezweckt den konstanten Induktions-Endwert Bₘ.

Durch die während des abfallenden Teils der Restdauer t_{c} oberhald der Kurve des Spulenstroms eingezeichneten Pfeile ist veranschaulicht, daß der bis zum Strom-Endwert Iₘ abfallende Spulenstromverlauf mindestens dreimal, z.B. jede Millisekunde, abgetastet wird; im Beispiel der Fig. 5a wird abfallende Teil des Spulenstroms viermal abgetastet. Aus den Abtastwerten wird gemäß der Erfindung das Steuersignal für die gesteuerte Spannungsquelle erzeugt, wie im einzelnen noch erläutert werden wird.

Die Fig. 5b zeigt in Ordinatenrichtung über der Zeit t als Abszisse den Verlauf der an der Serienschaltung mit der H-Schaltung bzw. mit der T-Schaltung wirksamen Spannung. Die erste Spitze Uₛ ist auf die erwähnte Resonanzüberhöhung zurückzuführen. Der darauf folgende konstante Wert ist der erwähnte Spannungs-Anfangswert Uₐ, der zur Versteilerung des Anstiegs des Spulenstroms beiträgt.

Ohne Resonanzüberhöhung würde während der gesamten Anstiegsdauer tₐ nur der Spannungs-Anfangswert Uₐ vorhanden sein. Während der Restdauer t_{c} tritt der konstante Spannungs-Endwert U_{c} auf. Aus Fig. 5b ist ersichtlich, daß, wie bereits erwähnt wurde, der Spannungs-Anfangswert Uₐ größer als der Spannungs-Endwert U_{c} ist.

In den Fig. 1 bis 4 ist durch einen Kontroller 41 bzw. 42 bzw. 43 bzw. 44, der zwischen dem Widerstand 10 bzw. 10' bzw. 22 bzw. 22' und einem steuereingang 7e bzw. 30e der gesteuerten Spannungsquelle 7 bzw. 30 angeordnet ist, deren erfindungsgemäße Steuerung veranschaulicht. Ferner steuert der entsprechende Kontroller die Transistoren 13, 14, 15, 16 der H-Schaltung bzw. die Schalter-Transistoren 25, 26 der T-Schaltung.

Der Kontroller 41 bzw. 42 bzw. 43 bzw. 44 ist im wesentlichen durch einen entsprechend programmierten Mikroprozessor realisiert. Diesem ist ein Analog/Digital-Wandler vorgeschaltet, der den Spannungsabfall am Widerstand 10 bzw. 10' bzw. 22 bzw. 22' digitalisiert. Mikroprozessor und Analog/Digital-Wandler sind natürlich von einem Taktoszillator getaktet.

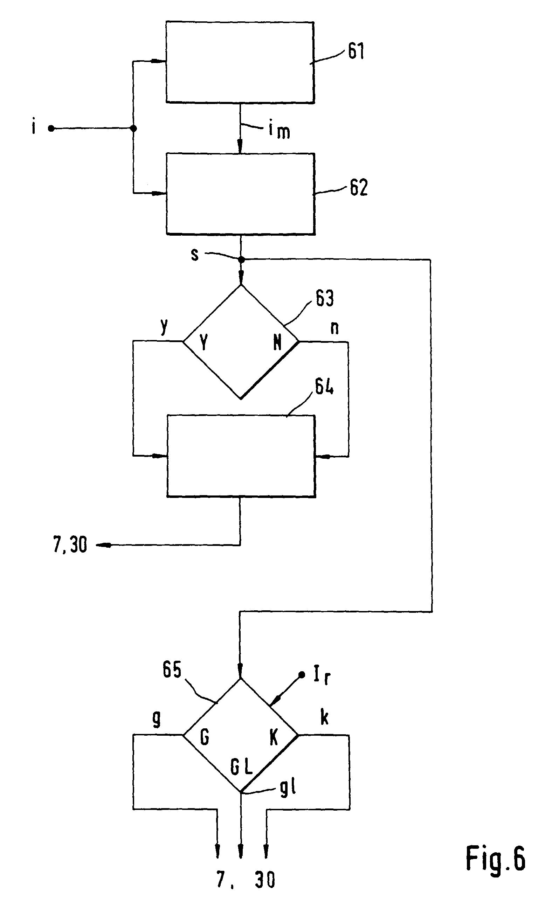

Der Mikroprozessor ist entsprechend dem in Fig. 6 dargestellten Flußdiagramm zu programmieren, in dem geeignete Funktions- und Entscheidungsblöcke dargestellt sind. Mit Kleinbuchstaben sind Digitalsignale versehen, die für das Flußdiagramm wichtig sind.

Mittels des bereits erwähnten Analog/Digital-Wandlers wird der Spannungsabfall am Widerstand digitalisiert, so daß ein den Spulenstrom I repräsentierendes Digitalsignal i entsteht. Dieses ist dem Eingang eines Maximumdetektors 61 und dem Eingang einer Torstufe 62 zugeführt, die auch mit einem vom Maximumdetektor 61 stammenden Maximumsignal iₘ gespeist ist. Die Torstufe 62 leitet nur solche Anteile des den Spulenstrom repräsentierenden Digitalsignals i als Stromsamples s weiter, die später als das Auftreten des Maximumsignals iₘ liegen.

Eine erste Entscheidungsstufe 63 überprüft aufeinander folgende, benachbarte Stromsamples s unter dem Kriterium, ob das spätere Sample größer als das frühere ist, ob also der Spulenstrom zwischen zwei Samples angestiegen ist, und gibt zutreffendenfalls an einem JA-Ausgang Y ein Steuersignal y sowie nicht-zutreffendenfalls an einem NEIN-Ausgang N ein Steuersignal n ab.

Das Steuersignal y veranlaßt eine Pulsdauerstufe 64, die Anstiegsdauer tₐ zu verlängern, und das Steuersignal n veranlaßt die Pulsdauerstufe 64, die Restdauer t_{c} zu verlängern. Ein Ausgang der Pulsdauerstufe führt zur Spannungsquelle 7 bzw. 30.

Eine zweite Entscheidungsstufe 65 überprüft laufend die Stromsamples s unter dem Kriterium, ob ein Stromsample s größer, gleich oder kleiner als ein Strom-Referenzwert iᵣ ist, der zum Strom-Endwert I_{c} proportional ist und ihn festlegt. Die Entscheidungsstufe 65 gibt zutreffendenfalls an einem GRÖSSER-Ausgang G ein Steuersignal g, an einem GLEICH-Ausgang GL eine Steuersignal gl oder an einem KLEINER-Ausgang K ein Steuersignal k ab.

Diese Steuersignale g, gl, k sind der Spannungsquelle 7 bzw. 30, gegebenenfalls unter Einfügung eines Digital/ Analog-Wandlers, zugeführt und wirken auf den von ihr in einer Periodendauer des Spulenstroms abgegebenen Spannungs-Anfangswert Uₐ derart ein, daß ihn das Steuersignal g in der folgenden Periodendauer vergrößert oder daß ihn das Steuersignal gl in der folgenden Periodendauer unverändert läßt oder daß ihn das Steuersignal k in der folgenden Periodendauer verkleinert.

In den Fig. 1 bis 4 sind die Transistoren 13, 14, 15, 16 der H-Schaltung bzw. die Schalter-Transistoren 25, 26 der T-Schaltung immer mit nicht-angeschlossener Steuer-Elektrode gezeichnet. Dadurch soll angedeutet werden, daß die Ansteuerung dieser Transistoren im Stand der Technik, z.B in der eingangs erwähnten US-A 44 10 926, hinlänglich beschrieben ist und der Fachmann somit weiß, was er wie anzusteuern hat. Ferner ist der gesteuerte Strompfad der Transistoren 13, 14, 15, 16 bzw. 25, 26 mit einer Freilaufdiode 17, 18, 19, 20 bzw. 27, 28 überbrückt.

Die erwähnten Transistoren sind zwar als Bipolar-Transistoren gezeichnet, jedoch können natürlich auch Feldeffekt-Transistoren, insb. Isolierschicht-Feldeffekt-Transistoren verwendet werden.

## Patentansprüche

1. Verfahren zum Regeln des in einer Spulenanordnung (1) fließenden Spulenstroms (I), die
- Teil eines ein Magnetfeld erzeugenden Magnetsystems eines magnetisch-induktiven Durchflußaufnehmers ist,
- einen Spulenkern und/oder einen Polschuh umfaßt und
- eine Induktivität L aufweist,
- welcher Spulenstrom in der ersten Halbperiode einer Periodendauer positiv mit einem konstanten ersten Strom-Endwert und in deren zweiter Halbperiode negativ mit einem konstanten zweiten Strom-Endwert ist, der zum ersten Strom-Endwert betragsgleich ist, und
- welcher Spulenstrom von einer Schaltungsanordnung erzeugt wird, die enthält:
-- eine Brückenschaltung als H-Schaltung (2) mit
--- einem ersten Brückenzweig aus dem gesteuerten Strompfad eines ersten Transistors (13),
--- einem zweiten Brückenzweig aus dem gesteuerten Strompfad eines zweiten Transistors (14),
--- einem dritten Brückenzweig aus dem gesteuerten Strompfad eines dritten Transistors (15) und
--- einem vierten Brückenzweig aus dem gesteuerten Strompfad eines vierten Transistors (16),
--- einer ersten Brückendiagonalen zwischen dem mit dem ersten Transistor verbundenen zweiten Transistor und dem mit dem dritten Transistor verbundenen vierten Transistor sowie
--- einer zweiten Brückendiagonalen zwischen dem mit dem ersten Transistor verbundenen dritten Transistor und dem mit dem zweiten Transistor verbundenen vierten Transistor, wobei
---- wobei entweder der erste und der vierte Transistor
---- oder der zweite und der dritte Transisor gleichzeitig leitend gesteuert sind,
-- die Spulenanordnung, die in der ersten Brückendiagonalen liegt,
-- einen Widerstand (10, 10'), der mit der H-Schaltung eine Serienschaltung bildet, von der ein erster Anschluß an einem Schaltungsnullpunkt (SN) liegt und durch die der Spulenstrom fließt, und
-- eine gesteuerte Spannungsquelle (7), die
--- einen Spannungsausgang (7c) aufweist und
--- eine über der Serienschaltung liegende Spannung bestimmt,
---- von der in jeder Halbperiode ein Spannungs-Anfangswert (Uₐ) während einer Anstiegsdauer (tₐ) des Spulenstroms - als einer ersten Teilperiode - höher ist als ein Spannungs-Endwert (U_{c}) während einer zweiten Teilperiode als Rest (t_{c}) der Halbperiode,
bei welchem Verfahren mittels des Spannungsabfalls am Widerstand (10, 10')
- einerseits zur Erzeugung des ersten bzw. des zweiten Strom-Endwerts der Spannungs-Endwert (U_{c}) konstant geregelt wird und
- andererseits eine Wirkung von Wirbelströmen, die während des Anstiegs des Spulenstroms in den Spulenkernen und/oder den Polschuhen induziert werden und die die Anstiegsflanke des Magnetfelds gegenüber der des Spulenstroms verzögern, kompensiert wird, indem
-- in jeder Halbperiode die Anstiegsdauer des Spulenstroms und die Höhe des Spannungs-Endwerts derart beeinflußt werden, daß nach dem Erreichen eines Strommaximums (Iₘ) kein weiterer Anstieg des Spulenstroms auftritt, so daß das Magnetfeld einen dem konstanten Strom-Endwert des Spulenstroms entsprechenden konstanten Magnetfeld-Endwert (Bₘ) schon erreicht, wenn der Spulenstrom das Strommaximum erreicht,
-- wobei aus dem während einer Halbperiode nach dem Maximum des Spulenstroms bis zur Erreichung des konstanten Strom-Endwerts auftretenden Verlauf des Spannungsabfalls am Widerstand durch mindestens dreimaliges aufeinanderfolgendes Abtasten eine Korrekturgröße für die über der H-Schaltung in der nächsten Halbperiode liegende Spannung gebildet wird.

2. Verfahren zum Regeln des in einer Spulenanordnung (1) fließenden Spulenstroms (I), die
- Teil eines ein Magnetfeld erzeugenden Magnetsystems eines magnetisch-induktiven Durchflußaufnehmers ist,
- einen Spulenkern und/oder einen Polschuh umfaßt und
- eine Induktivität L aufweist,
- welcher Spulenstrom in der ersten Halbperiode einer Periodendauer positiv mit einem konstanten ersten Strom-Endwert und in deren zweiter Halbperiode negativ mit einem konstanten zweiten Strom-Endwert ist, der zum ersten Strom-Endwert betragsgleich ist, und
- welcher Spulenstrom von einer Schaltungsanordnung erzeugt wird, die enthält:
-- eine gesteuerte Spannungsquelle (30), die einen ersten und einen zweiten Spannungsausgang (30c, 30d) aufweist, und
-- eine T-Schaltung (3, 3'), die umfaßt:
--- einen Widerstand (22, 22'), der mit der Spulenanordnung eine Serienschaltung (4, 4') bildet, von der ein erster Anschluß an einem Schaltungsnullpunkt (SN) liegt und durch die der Spulenstrom fließt,
--- einen ersten Schalter-Transistor (25), von dessen gesteuertem Strompfad ein erster Anschluß mit einem zweiten Anschluß der Serienschaltung verbunden ist und ein zweiter Anschluß am ersten Spannungsausgang (30c) der gesteuerten Spannungsquelle liegt, der eine über der Serienschaltung liegende positive Spannung abgibt,
--- einen zweiten Schalter-Transistor (26), von dessen gesteuertem Strompfad ein erster Anschluß mit dem zweiten Anschluß der Serienschaltung verbunden ist und ein zweiter Anschluß am zweiten Spannungsausgang (30d) der gesteuerten Spannungsquelle liegt, der eine über der Serienschaltung liegende negative Spannung abgibt,
---- von welcher positiven bzw. negativen Spannung ein positiver bzw. negativer Spannungs-Anfangswert (Uₐ) in jeder Halbperiode während einer Anstiegsdauer (tₐ) des Spulenstroms - als einer ersten Teilperiode - höher bzw. niedriger ist als ein positiver bzw. negativer Spannungs-Endwert während einer zweiten Teilperiode als Rest (t_{c}) der Halbperiode,
bei welchem Verfahren mittels des Spannungsabfalls am Widerstand (22, 22')
- einerseits zur Erzeugung des ersten bzw. des zweiten Strom-Endwerts der positive bzw. negative Spannungs-Endwert konstant geregelt wird und
- andererseits eine Wirkung von Wirbelströmen, die während des Anstiegs des Spulenstroms in den Spulenkernen und/oder den Polschuhen induziert werden und die die Anstiegsflanke des Magnetfelds gegenüber der des Spulenstroms verzögern, kompensiert wird, indem
-- in jeder Halbperiode die Anstiegsdauer (tₐ) des Spulenstroms und die Höhe des positiven bzw. negativen Spannungs-Endwerts derart beeinflußt werden, daß nach dem Erreichen eines Strommaximums (Iₘ) kein weiterer Anstieg des Spulenstroms auftritt, so daß das Magnetfeld einen dem konstanten Strom-Endwert des Spulenstroms entsprechenden konstanten Magnetfeld-Endwert (Bₘ) schon erreicht, wenn der Spulenstrom das Strommaximum erreicht.
-- wobei aus dem während einer Halbperiode nach dem Maximum des Spulenstroms bis zur Erreichung des konstanten Strom-Endwerts auftretenden Verlauf des Spannungsabfalls am Widerstand durch mindestens dreimaliges aufeinanderfolgendes Abtasten eine Korrekturgröße für die über der T-Schaltung in der nächsten Halbperiode liegende Spannung gebildet wird.

3. Verfahren nach Anspruch 1, bei dem
- ein erster Anschluß des Widerstands (10, 10') mit dem Spannungsausgang (7c) der Spannungsquelle (7) und
- ein zweiter Anschluß des Widerstands über eine Diode (9), deren Flußrichtung gleich der Richtung des Spulenstroms ist, am Verbindungspunkt von erstem und drittem Transistor (13, 15) der H-Schaltung (2) angeschlossen ist, während der Verbindungspunkt von zweitem und viertem Transistor (14, 16) am Schaltungsnullpunkt (SN) liegt, und
- zur H-Schaltung ein eine Kapazität C aufweisender Kondensator (12) parallelgeschaltet ist,
-- der mit der Induktivität L einen Resonanzkreis bildet, aufgrund von dessen Wirkung
--- die Spannung über der H-Schaltung resonanz-überhöht ist und
--- der Spulenstrom während der Anstiegsdauer (tₐ) eine steilere Anstiegsflanke hat, als wenn der Resonanzkreis nicht vorhanden wäre.

4. Verfahren nach Anspruch 2, bei dem
- die Spulenanordnung (1) am Schaltungsnullpunkt (SN) liegt,
- der Widerstand (22, 22') zwischen dem Verbindungspunkt des ersten und des zweiten Schalter-Transistors (25, 26) und der Spulenanordnung liegt,
- ein zweiter Anschluß des ersten Schalter-Transistors (25)
-- über die Katoden/Anoden-Strecke einer ersten Diode (31) mit dem ersten Spannungsausgang (30c) der gesteuerten Spannungsquelle (30) und
-- über einen ersten Kondensator (33) der Kapazität C₁ mit dem Schaltungsnullpunkt (SN) verbunden ist, und
- ein zweiter Anschluß des zweiten Schalter-Transistors (26)
-- über die Anoden/Katoden-Strecke einer zweiten Diode (32) mit dem zweiten Spannungsausgang (30d) der gesteuerten Spannungsquelle (30) und
-- über einen zweiten Kondensator (34) der Kapazität C₂ mit dem Schaltungsnullpunkt (SN) verbunden ist,
-- welcher erste bzw. zweite Kondensator mit der Induktivität L jeweils einen Resonanzkreis bildet, aufgrund von dessen Wirkung
--- die Spannung über der Serienschaltung resonanz-überhöht ist und
--- der Spulenstrom während der Anstiegsdauer (tₐ) eine steilere Anstiegsflanke hat, als wenn der Resonanzkreis nicht vorhanden wäre.
